# EUROPÄISCHE PATENTSCHRIFT

(11) **EP 2 871 149 B1**
(45) Veröffentlichungstag und Bekanntmachung des Hinweises auf die Patenterteilung: **21.06.2017**
(21) Anmeldenummer: 14075068.8
(22) Anmeldetag: 13.10.2014
(51) Int. Cl.: B66C 23/70

(54) **Antrieb einer Schiebekulisse eines Verriegelungssystems eines Teleskopiersystems eines Kranauslegers**
Drive for a slide of a locking system of a telescopic system of a crane arm
Entraînement d'une coulisse d'un système de verrouillage d'un système de télescopage d'une flèche de grue

(30) Priorität: 11.11.2013 DE 202013010381 U
(43) Veröffentlichungstag der Anmeldung: 13.05.2015
(73) Patentinhaber: Terex Global GmbH, 8200 Schaffhausen (CH)
(72) Erfinder: Klein, Ascan, 66894 Käshofen (DE); Jene, Thilo, 66583 Spiesen (DE); Conrad, Frank, 66500 Hornbach (DE)
(74) Vertreter: Moser Götze & Partner Patentanwälte mbB

(56) Entgegenhaltungen:
- EP-A1- 2 835 336
- DE-A1- 19 811 813
- DE-U1-202008 007 904
- GB-A- 2 053 149
- US-A- 4 664 272

## Beschreibung

Die Erfindung betrifft den Antrieb einer Schiebekulisse eines Verriegelungssystems eines Teleskopiersystems, mit einem Teleskopierzylinder mit einem äußeren Teleskopschuss und einem inneren Teleskopschuss, die jeweils mit einem Verriegelungsloch versehen sind, in das ein Verriegelungsbolzen über eine, mit einer Kulissenbahn versehenen Schiebekulisse und einem Greifer lösbar ein- und ausfahrbar ist, wobei der Verriegelungsbolzen mittels eines in der Kulissenbahn laufenden Mitnehmers derart bewegbar ausgebildet ist, dass der Verriegelungsbolzen eine lineare Bewegung ausführt und die Auslegerschüsse durch Einführen des Verriegelungsbolzens in das Verbolzungsloch miteinander verbindbar sind, wobei die Schiebekulisse mit einem elektrischen Linearantrieb antreibbar ist.

Derartige Teleskopschüsse für Mobilkranausleger sind beispielsweise aus der DE 198 11 813 A1 bekannt. Bei diesem bekannten Mobilkranausleger sind die Verriegelungsbolzen in einem inneren Teleskopschuss geführt und mittels einer Feder radial nach außen vorgespannt. Dabei ist der Verriegelungsbolzen an seinem äußeren Ende so ausgebildet, dass er in eine Aufnahme eingreifen kann, die in einem den inneren Teleskopschuss umgebenden äußeren Teleskopschuss vorgesehen ist. Ferner ist eine Lösevorrichtung vorgesehen, die das innere Ende eines Verriegelungsbolzens in Eingriff nimmt, um dessen verriegelte Position gegen die Federvorspannung zu lösen.

Die Betätigung der Verriegelungsbolzen erfolgt dabei mittels eines hydraulischen Antriebs. Nachteilig dabei ist, dass Hydraulikleitungen benötigt werden, die innerhalb oder außerhalb des Teleskopauslegers zu dem Verriegelungssystem geführt werden müssen. Dadurch ist ein erhöhter Platz-, Gewichts- und Montageaufwand erforderlich, der wiederum mit zusätzlichen Kosten verbunden ist. Ferner ist der Druckaufbau innerhalb der Hydraulikleitungen von verschiedenen äußeren Einflüssen abhängig, insbesondere von der Temperatur und der Leitungslänge bei Verwendung einer teleskopierbaren Ölführung. Außerdem müssen zur Steuerung der derartigen Verriegelung Ventile betätigt werden, die eine zusätzliche Verlegung elektrischer Leitungen in dem Verriegelungssystem erforderlich machen.

Aus der nachveröffentlichten europäischen Patentanmeldung EP 2 835 336 A1 ist bereits ein mechanischer Verriegelungskopf bekannt, der innerhalb und entlang der Längsachse eines zumindest zwei Teleskopschüsse umfassenden Teleskops mittels einer Teleskopiereinrichtung verfahrbar ist. Die Telekopiereinrichtung weist einen Grundkörper auf, eine Entriegelungseinrichtung zum Entriegeln einer Teleskopschuss-Verriegelung und einer Koppeleinrichtung zum Koppeln eines Teleskopausschusses an die Teleskopiereinrichtung. Der Verriegelungskopf ist mit einen Betätigungsglied versehen, über das die Entriegelungseinrichtung und die Koppeleinrichtung mechanisch betätigbar sind. Das Betätigungsglied weist eine erste Kulissenführung für die Entriegelungseinrichtung und eine zweite Kulissenführung für die Koppeleinrichtung auf, wobei sich die Kulissen der beiden Kulissenführungen in einer einzigen oder parallelen Ebene erstrecken. Das Betätigungsglied wird relativ zum Grundkörper mittels eines Hydraulikzylinders bewegt. Für diese Bewegung können jedoch auch andere und für diese Funktion geeignete Mittel vorgesehen werden, wie beispielsweise elektrische, hydraulische oder pneumatische Antriebe, insbesondere Linearantriebe. Aufgabe der vorliegenden Erfindung ist es, eine Vorrichtung zur Betätigung und Verriegelung von Teleskopschüssen, insbesondere von Teleskopschüssen eines Auslegers eines Fahrzeugkrans, zu schaffen, welche die oben genannten Nachteile überwindet, kompakt gebaut, wartungsarm ist und geschützt vor äußeren Einflüssen ist.

Gelöst wird diese Aufgabe durch die Merkmale des Anspruchs 1, insbesondere dadurch, dass der elektrische Linearantrieb über ein Kabel mit einer Steuereinheit verbunden und steuerbar ist und der elektrische Linearantrieb mit einer integrierten Sensorik zur Positionserfassung oder einer separaten Lageerfassung einer Anbindung der Schiebekulisse an den Linearantrieb versehen ist. Weitere vorteilhafte Ausbildungen der Erfindung sind Gegenstand der Unteransprüche.

In einer vorteilhaften Weiterbildung der Erfindung ist es vorgesehen, dass das Kabel zur Steuereinheit über eine Kabeltrommel zuführbar ist. Solche Kabeltrommeln werden auf dem Teleskopkran mitgeführt und befinden sich oftmals im Bereich hinter der Teleskopiereinheit. Damit wird die schon vorhandene elektrische Energiezuführung zur Versorgung der elektrisch angetriebenen Sicherungs- und Verbolzungseinheit genutzt, womit diese als einzige vorzuhaltende Energieversorgung in der Teleskopiereinheit verbleibt. Neben den vorgangs erwähnten Vorzügen der erfindungsgemäßen Lösung kann somit insbesondere eine gesonderte Hydraulikeinheit für die Versorgung der Sicherungs- und Verbolzungseinheit (SVE) entfallen.

In einer weiteren vorteilhaften Ausführung der Erfindung ist es vorgesehen, dass die Steuereinheit über ein Kabel mit der SVE verbunden ist.

Weitere erfindungsgemäße Ausführungen sehen vor, dass der elektrische Linearantrieb mit einer mechanischen Selbsthemmung versehen ist, oder dass der elektrische Linearantrieb mit einer Haltebremse versehen ist, sowie dass die mechanische Selbsthemmung oder Haltebremse eine jeweils angefahrene Position des Linearantriebs ohne Aufbringen elektrischer Energie halten können.

Eine erfindungsgemäße Ausführung sieht vor, dass für die Verbolzung zweier Teleskopschüsse untereinander jeweils zwei Verbolzungslöcher vorgesehen sind, wobei die seitlichen Verbolzungslöcher einander gegenüberliegend angeordnet und durch jeweils einen eigenen Verriegelungsbolzen miteinander verbolzt werden.

Die Erfindung ist in der beiliegenden Zeichnung dargestellt und wird nachfolgend näher beschrieben; es zeigt:

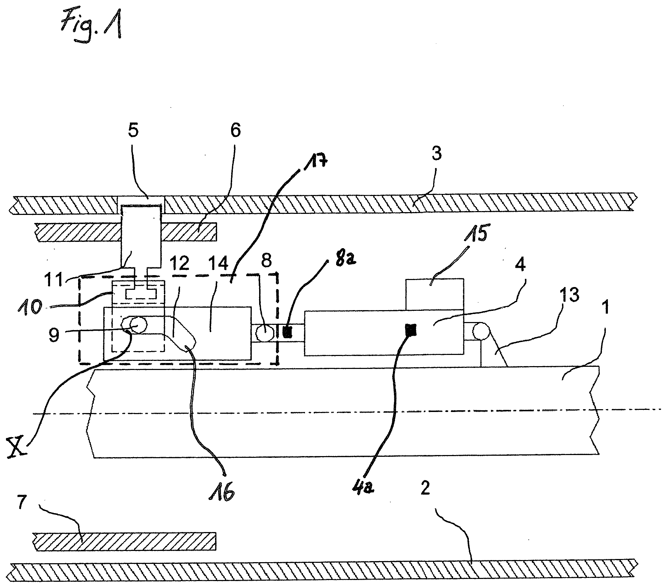

Figur 1: die schematische Seitenansicht vertikal geschnitten der Situation entlang der Längsachse des Teleskopierzylinders, der in einem inneren Teleskopschuss und einem, den inneren Teleskopschuss umgebenden äußeren Teleskopschuss verläuft, wobei der innere Teleskopschuss und der äußere Teleskopschuss mit einem, in Verbolzungslöcher radial verschiebbare Verriegelungsbolzen miteinander verriegelt werden können, die radiale Verbindung beider Teleskopschüsse vertikal im rechten Winkel zur Längsachse des Teleskopierzylinders verläuft, die vertikal radiale Bewegung des Verriegelungsbolzens mittels eines in einer Kulissenbahn laufenden Mitnehmers einer Schiebekulisse erfolgt und die Schiebekulisse durch einen mit dem Teleskopzylinder verbundenen Linearantrieb betätigt werden kann;

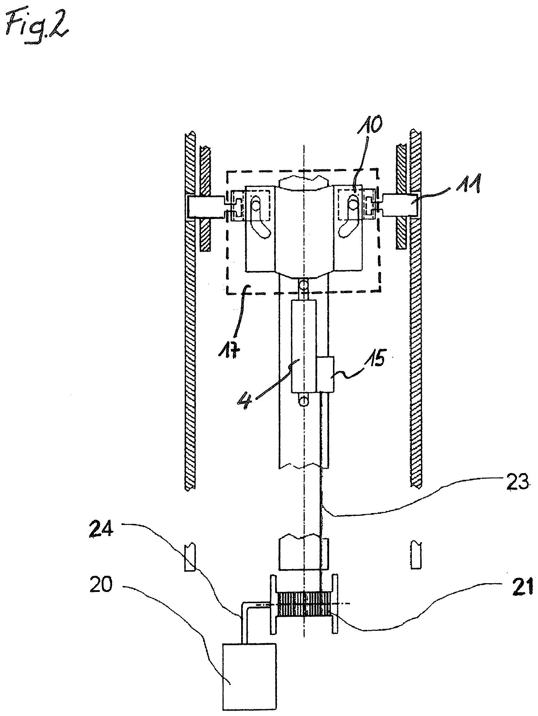

Figur 2: die schematische Draufsicht, horizontal geschnitten, auf einen Teleskopierzylinder gemäß Figur 1 , mit einer elektrischen Zuleitung für den erfindungsgemäßen elektrischen Linearantrieb, die auf eine Kabeltrommel aufgerollt werden kann, mit einer Steuereinheit, die den Linearantrieb steuert, wobei der innere Teleskopschuss und der äußere Teleskopschuss durch zwei, in Verbolzungslöcher radial verschiebbare Verriegelungsbolzen miteinander verriegelt werden können, die radiale Verbindung beider Teleskopschüsse horizontal im rechten Winkel zur Längsachse des Teleskopierzylinders verläuft, die horizontale radiale Bewegung des Verriegelungsbolzens mittels eines in einer Kulissenbahn laufenden Mitnehmers einer Schiebekulisse erfolgt und die Schiebekulisse durch einen mit dem Teleskopzylinder verbundenen Linearantrieb betätigt werden kann, wobei sowohl die Kabeltrommel wie auch die Steuereinheit und die Verbindung zwischen Kabeltrommel und Steuereinheit in dieser Darstellung außerhalb der Teleskopiereinheit liegen;

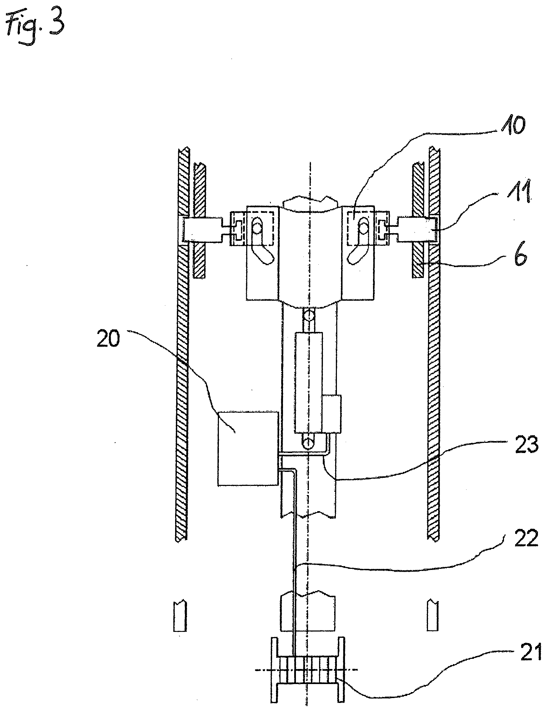

Figur 3: die schematische Draufsicht, horizontal geschnitten, auf einen Teleskopierzylinder gemäß Figur 1 , mit einer den elektrischen Linearantrieb steuernden Steuereinheit und einem die Steuereinheit mit elektrischem Strom versorgenden elektrischen Kabel, das auf eine Kabeltrommel aufrollbar ist, wobei die Kabeltrommel sich dabei außerhalb der Teleskopiereinheit befindet, die Steuereinheit innerhalb der Teleskopiereinheit angeordnet ist.

Wie die Figur 1 im Querschnitt zur Längsachse zeigt, ist zum Ausfahren eines nicht näher dargestellten Mobilkranauslegers ein Teleskopierzylinder 1 vorgesehen. Der Mobilkranausleger weist einen aus einer Unterschale 2 und einer Oberschale 3 bestehenden äußeren Teleskopschuss und einem in dem äußeren Teleskopschuss 2, 3 längsaxial verschiebbaren inneren Teleskopschuss auf, der aus einer Unterschale 7 und einer Oberschale 6 besteht. Zur Verriegelung und Sicherung kann die Oberschale 6 des inneren Teleskopschusses mit der Oberschale 3 des äußeren Teleskopschusses verbunden werden. Aus der Oberschale 6 des inneren Teleskopschusses heraus ist dazu ein Verriegelungsbolzen 11 radial in ein Verbolzungsloch 5 in der Oberschale 3 des äußeren Teleskopschusses einfahrbar.

Zur radialen Verschiebung des Verriegelungsbolzens 11 ist die auf dem Teleskopzylinder 1 befindliche Sicherungs- und Verbolzungseinheit (SVE) 17 gemäß der Erfindung mit einem elektrischen Linearantrieb 4 versehen. Der elektrische Linearantrieb 4 ist an einem Ende über eine Anbindung 13 mit dem Teleskopierzylinder 1 verbunden und auf der der Anbindung 13 gegenüberliegenden Seite über eine Anbindung 8 mit einer Schiebekulisse 14 verbunden. Die Schiebekulisse 14 weist eine Kulissenbahn 12 auf, in der ein Mitnehmer 9 geführt ist.

Der Mitnehmer 9 steht über einen Greifer 10 mit dem Verriegelungsbolzen 11 in Wirkverbindung. Die Kulissenbahn 12 ist mit einem Kulissenbahnende 16 versehen. Die mechanische Getriebewirkung wird hervorgerufen durch die längsaxiale Verschiebung der Schiebekulisse 14, herbeigeführt durch den Mitnehmer 9, der entlang der Kulissenbahn 12 innerhalb der Schiebekulisse 14, vom Kulissenbahnende 16 zu einer Verriegelungsposition X geführt wird. Bei einer längsaxialen Verschiebung der Schiebekulisse 14 wird der Verriegelungsbolzen 11 durch den Wirkzusammenhang zwischen Mitnehmer 9 und dem Greifer 10 radial in vertikaler Richtung nach außen in das Verbolzungsloch 5 der Oberschale 3 des äußeren Teleskopschusses eingeschoben, wodurch der innere Teleskopschuss und der äußere Teleskopschuss miteinander verriegelt werden. Der elektrische Linearantrieb 4 ist mit einer integrierten Sensorik 4a zur Positionserfassung oder einer separaten Lageerfassung 8a einer Anbindung der Schiebekulisse 14 an den Linearantrieb versehen.

Wie die Figur 2 zeigt, ist dem Linearantrieb 4 ein elektrischer Anschluss 15 zugeordnet, der durch ein Elektrokabel 23 mit elektrischer Antriebsenergie für den elektrischen Linearantrieb 4 versorgt werden kann. Das Kabel 23 ist längenveränderbar und kann auf eine Kabeltrommel 21 auf- und abgerollt werden.

Die Steuerung des elektrischen Linearantriebs 4 erfolgt über eine elektrische Steuereinheit 20, die über ein Kabel 24 mit der Kabeltrommel 21 verbunden ist, wobei die Möglichkeit nicht dargestellt ist, die Kabeltrommel 21 wie auch die Steuereinheit 20 und die Verbindung zwischen Kabeltrommel 21 und Steuereinheit 20 innerhalb der Teleskopiereinheit anzuordnen.

Bei der Ausführung gemäß der Figur 3 ist die elektrische Steuereinheit 20 über das elektrische Kabel 23 mit dem elektrischen Linearantrieb 4 verbunden und über ein weiteres Kabel 22 mit elektrischer Energie versorgt. Das weitere Kabel 22 kann auf die Kabeltrommel 21 aufgerollt werden und ist damit längenveränderbar.

Bei den Ausführungen gemäß den Figuren 2 und 3 sind zwei einander gegenüberliegende Sicherungs- und Verbolzungslöcher einer kombinierten Sicherungs- und Verbolzungseinheit (SVE) 17 vorgesehen. Diese Sicherungs- und Verbolzungseinheit 17 ist mit Greifern 10 versehen, mit denen die Verriegelungsbolzen 11 radial nach außen beziehungsweise nach innen entweder in eine Verriegelungs- oder in eine Entriegelungsposition gebracht werden können.

### Bezugszeichen

- 1: Teleskopierzylinder
- 2: Unterschale eines äußeren Teleskopschusses
- 3: Oberschale eines äußeren Teleskopschusses
- 4: elektrischer Linearantrieb
- 4a: Sensorik
- 5: Verbolzungsloch
- 6: Oberschale des inneren Teleskopschusses
- 7: Unterschale des inneren Teleskopschusses
- 8: Anbindung des Linearantriebs
- 8a: Lageerfassung
- 9: Mitnehmer
- 10: Greifer
- 11: Verriegelungsbolzen
- 12: Kulissenbahn
- 13: Anbindung des Linearantriebs
- 14: Schiebekulisse
- 15: Elektroanschluss
- 16: Kulissenbahnende
- 17: SVE
- 20: elektrische Steuereinheit
- 21: Kabeltrommel
- 22: Kabel
- 23: Kabel
- 24: Kabel
- X: Verriegelungsposition

## Patentansprüche

1. Antrieb einer Schiebekulisse eines Verriegelungssystems eines Teleskopiersystems, mit einem Teleskopierzylinder (1) mit einem äußeren Teleskopschuss (2, 3) und einem inneren Teleskopschuss (6, 7), die jeweils mit einem Verriegelungsloch (5) versehen sind, in das ein Verriegelungsbolzen (11) über eine, mit einer Kulissenbahn (12) versehenen Schiebekulisse (14) und einen Greifer (10) lösbar ein- und ausfahrbar ist, wobei der Verriegelungsbolzen (11) mittels eines in der Kulissenbahn (12) laufenden Mitnehmers (9) derart bewegbar ausgebildet ist, dass der Verriegelungsbolzen (11) eine lineare Bewegung ausführt und die Auslegerschüsse (3, 6) durch Einführen des Verriegelungsbolzens (11) in das Verbolzungsloch (5) miteinander verbindbar sind, wobei die Schiebekulisse (14) mit einem elektrischen Linearantrieb (4) antreibbar ist, **dadurch gekennzeichnet, dass** der elektrische Linearantrieb (4) über ein Kabel (23) mit einer Steuereinheit (20) verbunden und steuerbar ist und der elektrische Linearantrieb (4) mit einer integrierten Sensorik (4a) zur Positionserfassung oder einer separaten Lageerfassung (8a) einer Anbindung der Schiebekulisse (14) an den Linearantrieb versehen ist.

2. Antrieb nach Anspruch 1, **dadurch gekennzeichnet, dass** der elektrische Linearantrieb (4) mit einer mechanischen Selbsthemmung versehen ist.

3. Antrieb nach Anspruch 2, **dadurch gekennzeichnet, dass** der elektrische Linearantrieb (4) mit einer Haltebremse versehen ist.

4. Antrieb nach Anspruch 3, **dadurch gekennzeichnet, dass** die Haltebremse als Selbsthemmung ausgebildet ist und eine jeweils angefahrene Position ohne Aufbringen elektrischer Energie hält.

5. Antrieb nach Anspruch 1, **dadurch gekennzeichnet, dass** die Verbolzung der Teleskopschüsse (3, 6, 2, 7) mit zwei Verbolzungslöchern (5) versehen sind.

6. Antrieb nach Anspruch 5, **dadurch gekennzeichnet, dass** für die Verbolzung zweier Teleskopschüsse (3, 6, 2, 7) untereinander jeweils zwei Verbolzungslöcher vorgesehen sind, wobei die seitlichen Verbolzungslöcher (5) einander gegenüberliegend angeordnet und durch jeweils einen eigenen Verriegelungsbolzen (11) miteinander verbolzbar sind.

## Claims

1. Drive of a sliding connecting member of a locking system of a telescopic system, having a telescopic cylinder (1) with an outer telescopic section (2, 3) and an inner telescopic section (6, 7), which are each provided with a locking hole (5) into which a locking bolt (11) can be entered and withdrawn in a releasable manner via a sliding connecting member (14), which is provided with a connecting member path (12), and a grasper (10), wherein the locking bolt (11) is designed to be moveable by means of an engagement member (9) running in the connecting member path (12) in such a way that the locking bolt (11) effects a linear movement and the jib sections (3, 6) can be connected to one another by insertion of the locking bolt (11) into the bolting hole (5), wherein the sliding connecting member (14) can be driven by an electric linear drive (4), **characterised in that** the electric linear drive (4) is connected to a control unit (20) via a cable (23) and can thereby be controlled and the electric linear drive (4) is provided with an integrated sensing system (4a) for location detection or with a separate position detection means (8a) for a connection of the sliding connecting member (14) to the linear drive.

2. Drive as claimed in claim 1, **characterised in that** the electric linear drive (4) is provided with a mechanical self-locking means.

3. Drive as claimed in claim 2, **characterised in that** the electric linear drive (4) is provided with a holding brake.

4. Drive as claimed in claim 3, **characterised in that** the holding brake is formed as a self-locking means and holds a respectively approached position without application of electric power.

5. Drive as claimed in claim 1, **characterised in that** the bolting arrangement of the telescopic sections (3, 6, 2, 7) is provided with two bolting holes (5).

6. Drive as claimed in claim 5, **characterised in that** for the bolting of two telescopic sections (3, 6, 2, 7) to one another, two bolting holes are provided in each case, wherein the lateral bolting holes (5) are disposed opposite one another and can be bolted to one another by a respective dedicated locking bolt (11).

## Revendications

1. Entraînement d'une coulisse d'un système de verrouillage d'un système télescopique d'un cylindre télescopique (1) comprenant une section télescopique externe (2, 3) et une section télescopique interne (6, 7) qui sont pourvues chacune d'un trou de verrouillage (5) dans lequel un boulon de verrouillage (11) peut être rentré et sorti de façon amovible par le biais d'une coulisse (14), pourvue d'une voie de coulisse (12), et d'une pince (10), le boulon de verrouillage (11) étant conçu de manière à pouvoir se déplacer au moyen d'un entraîneur (9) circulant dans la voie de coulisse (12) de telle sorte que le boulon de verrouillage (11) effectue un mouvement linéaire et les sections de flèche (3, 6) peuvent être reliées entre elles par insertion du boulon de verrouillage (11) dans le trou de verrouillage (5), la coulisse (14) pouvant être entraînée au moyen d'un entraînement linéaire électrique (4), **caractérisé en ce que** l'entraînement linéaire électrique (4) peut être relié par l'intermédiaire d'un câble (23) à une unité de commande (20) et être commandé par celle-ci, et **en ce que** l'entraînement électrique linéaire (4) est pourvu d'un système de détection intégré (4a) destiné à détecter la position ou à détecter séparément en position (8a) la liaison de la coulisse (14) à l'entraînement linéaire.

2. Entraînement selon la revendication 1, **caractérisé en ce que** l'entraînement linéaire électrique (4) est muni d'un auto-verrouillage mécanique.

3. Entraînement selon la revendication 2, **caractérisé en ce que** l'entraînement linéaire électrique (4) est muni d'un frein de maintien.

4. Entraînement selon la revendication 3, **caractérisé en ce que** le frein de maintien est conçu comme un auto-verrouillage et maintient une position rapprochée respective sans application d'énergie électrique.

5. Entraînement selon la revendication 1, **caractérisé en ce que** le boulonnage des sections télescopiques (3, 6, 2, 7) sont pourvues de deux trous de boulonnage (5).

6. Entraînement selon la revendication 5, **caractérisé en ce que** les deux trous de boulonnage sont destinés chacun au boulonnage de deux sections télescopiques (3, 6, 2, 7) entre elles, les trous de boulonnage (5) latéraux étant disposés à l'opposé l'un de l'autre et pouvant être boulonnés ensemble au moyen d'un boulon de verrouillage (11) propre.
